# EUROPEAN PATENT SPECIFICATION

(11) **EP 4 102 834 B1**
(45) Date of publication and mention of the grant of the patent: **20.09.2023**
(21) Application number: 21178413.7
(22) Date of filing: 09.06.2021
(51) Int. Cl.: H04N 7/18, B60R 25/30, B60R 1/00, G01P 15/00

(54) **SYSTEM AND METHOD FOR A VEHICLE**
SYSTEM UND VERFAHREN FÜR EIN FAHRZEUG
SYSTÈME ET PROCÉDÉ POUR UN VÉHICULE

(43) Date of publication of application: 14.12.2022
(73) Proprietor: Veoneer Sweden AB, 447 37 Vårgårda (SE)
(72) Inventor: HÖFELSAUER, Herbert, 85716 Unterschleißheim (DE)
(74) Representative: Reichert & Lindner Partnerschaft Patentanwälte

(56) References cited:
- WO-A1-03/099610
- WO-A1-2015/090670
- WO-A1-2016/016768
- DE-A1- 19 702 363
- DE-A1-102018 219 240
- US-A1- 2014 300 739

## Description

The invention relates to an on-board system and corresponding method for monitoring a vehicle, in particular for damage event detection.

US 10 604 096 B2 relates to a system for damage event detection relying on a plurality of body sound sensors distributed on the vehicle surface. This approach requires a larger number of body sound sensors in continuous operation. The system can detect that a damage event occurred.

US 9,902,571 B2 relates to a parked vehicle monitoring system, where the system is external to the vehicle. A region of interest about the vehicle is defined and a person within the region of interest is detected and tracked.

DE 10 2016 210 773 A1 relates to a method according to which sensors (e.g. microphones, acceleration sensors, inclination sensors) on board of a vehicle are relied on to detect a damage event. If a damage event is detected, an on-board camera may be activated.

WO 2015/090670 discloses a vehicle camera system for damage event detection, the system comprising at least one detector for radiation in the visible and/or the infrared portion of the electromagnetic spectrum; at least one sensor, the at least one sensor including at least one sensor for vibration and/or acceleration; a control and evaluation unit connected to the at least one detector and the at least one sensor, configured to receive and evaluate signals from the at least one detector; and the control and evaluation unit.

US 2014/300739 discloses the ability of capturing before the event is possible because all cameras are continuously recording and such trigger events access the multi-channel digital video recorder.

Damage event detection according to prior art either relies on a system external to the vehicle, and thus is only possible where such an external system is present, or on a plurality of on-board sensors in constant operation, requiring a corresponding power supply and furthermore not able to provide information on the cause of the damage, e.g. a person damaging the vehicle, or perhaps to prevent the damage. The object of the invention is to provide a system for a vehicle which overcomes at least some of the disadvantages of the prior art. This object is achieved by a system according to claim 1. Claim 10 relates to a corresponding vehicle and claim 13 to a corresponding method. The dependent claims relate to advantageous embodiments. The system, according to the invention, for a vehicle comprises at least one detector for radiation in the visible and / or the infrared portion of the electromagnetic spectrum. The system also includes at least one sensor, which at least one sensor includes at least one sensor for vibration and / or acceleration.

According to the invention a control and evaluation unit is provided which is connected to the at least one detector and the at least one sensor. The control and evaluation unit is configured to receive and evaluate signals from the at least one detector, and is further configured to activate the at least one sensor if the control and evaluation unit determines from the signals received from the at least one detector that an entity is approaching the vehicle.

In this way, the system according to the invention does not require the sensors to be in constant operation.

The entity may be an object, a human being, or an animal. The control and evaluation unit, for carrying out its functions, may include one or more data processors and one or more memory units, and may be suitably programmed to carry out said functions. A corresponding computer program may be stored in the one or more memory units or be loadable into the one or more memory units. The control and evaluation unit may be configured to carry out further functions not related to the invention. The control and evaluation unit may be implemented as or in an ECU (electronic control unit).

In an embodiment the at least one detector includes at least one camera operating in the visible range and / or the infrared range of the electromagnetic spectrum. Both the visible range and the infrared range allow to detect an approaching entity. This may be done, for example, by known image-processing methods.

In an embodiment the system includes at least one camera in addition to the at least one detector, and the control and evaluation unit is further configured to activate this at least one camera, if the control and evaluation unit determines that an entity is approaching the vehicle. This at least one camera may specifically serve to record images which assist in identifying an entity which may cause damage to the vehicle. It is conceivable that in this embodiment one or more cameras are also used as detectors to determine whether an entity is approaching the vehicle. These latter cameras may for example be low resolution and/or low power consumption in comparison to the one or more cameras activated only once an entity approaching the vehicle has been detected. Instead of or in addition to such low-resolution cameras, also detectors for infrared radiation may be used to determine whether an entity is approaching the vehicle.

In an embodiment, the at least one detector includes at least one thermoelectric or pyroelectric detector. These detectors operate in the infrared portion of the electromagnetic spectrum, i.e. they are capable of detecting radiation from the infrared portion of the electromagnetic spectrum.

In an embodiment the at least one sensor includes at least one body sound sensor and / or at least one inertial sensor. Vibrations caused by a contact or by a damage event (e.g. a scratch to the surface of the vehicle) propagate as sound within the materials of the vehicle, which sound may be detected by body sound sensors, e.g. accelerometers. An inertial sensor can sense accelerations of the vehicle or of parts thereof, caused for example by an impact leading to a displacement of the vehicle and / or a deformation of a section of the vehicle. Inertial sensors may also be employed to sense vibrations of parts of the vehicle and may therefore also be used as body sound sensors. In a further development the at least one sensor additionally includes at least one microphone. Such a microphone may be used to detect sound propagating through the air, for example from an external noise event or produced by an event causing damage to the vehicle, like scratching.

In an embodiment the at least one sensor further includes at least one capacitive sensor and / or at least one conductive sensor. These may be used to obtain further information on a contact or damage event, in particular they may serve to locate a contact on the vehicle's surface more precisely than possible with e.g. body sound sensors. The at least one sensor may also further include at least one ultrasonic sensor. This may be used to track an entity to provide further information; to this end, the ultrasonic sensor may emit ultrasonic waves and receive ultrasonic waves reflected from surrounding surfaces, including surfaces of the entity.

Each of these types, capacitive, conductive, ultrasonic, can be employed by itself in addition to the vibrational and/or acceleration sensors, or any combination of these types can be employed in addition to the vibrational and/or acceleration sensors.

In an embodiment the control and evaluation unit is further configured to classify a contact between the vehicle and the entity based on signals received from the at least one sensor. Such a classification may for example distinguish between scratches and impacts, and may further distinguish damage events according to severity, e.g. an impact of a pebble on a door of the vehicle or an impact of another vehicle, possibly travelling at high speed. One approach to such a classification of a contact between the vehicle and the entity uses envelope curves calculated from the signals of the at least one sensor and the contact is classified based on characteristics of the envelope curves.

A contact between the entity and the vehicle primarily is understood in the usual direct sense, meaning the entity at least touching the vehicle. It furthermore includes an indirect sense, the entity acting on the vehicle via an object, e.g. a person hitting the vehicle with a stick or with a projectile, like a hurled stone. As a contact is sensed by the at least one sensor, ultimately a contact within the meaning of this application is any event that to the at least one sensor appears as a contact, i.e. any event causing sensor signals that the system (e.g. the control and evaluation unit) qualifies as a contact. Therefore, for example, a heavy impact of an object may occur close to the vehicle, without the vehicle being touched by the object or by debris resulting from the impact. The impact may, however, cause strong vibrations and / or shock waves in the ground on which the vehicle is located. The system according to the invention, via the sensors, may sense these vibrations / shock waves as a contact. This is quite reasonable, as such vibrations / shock waves may cause damage to the vehicle. The occurrence of a contact in this general sense may be stored by the system, and, as described above, in embodiments the contact may be classified.

In an embodiment the control and evaluation unit is further configured to trigger a warning signal if the control and evaluation unit determines that a contact between the entity and the vehicle is likely. The warning signal, if triggered, may be generated by devices present in the vehicle primarily for other purposes, e.g. by a horn of the vehicle, lights of the vehicle, or a combination thereof. Whether a contact between the entity and the vehicle is likely may be determined by various criteria. For example, a contact may be deemed likely if a distance between the entity and the vehicle is below a predefined threshold (such a threshold stored in the control and evaluation unit in suitable format). A direction of motion of the entity may also be taken into account. The warning signal has a chance to prevent damage to the vehicle, i.e. it may alert an unaware entity to the vehicle's presence or deter an individual intending to damage the vehicle.

In an embodiment in which the system includes at least one camera the system is configured to store image data from the camera captured within a time-interval stretching from a predefined temporal distance before to a predefined temporal distance after a contact between the vehicle and the entity. In this way image data can be stored which show the contact, e.g. a damage event, occurring.

The cameras used in embodiments of the system may include cameras which are provided on board of the vehicle for further purposes, not related to the invention. The cameras may also include dedicated cameras, provided specifically for purposes of the invention. Likewise, sensors used in embodiments of the system may include sensors which are provided on board of the vehicle for further purposes, not related to the invention. The sensors may also include dedicated sensors, provided specifically for purposes of the invention.

A vehicle benefits from the advantages provided by the system according to the invention if the system according to the invention is implemented in the vehicle. The vehicle may in particular be configured such that the system is activated if the vehicle is in a parked state. The at least one detector for radiation in the visible and / or the infrared portion of the electromagnetic spectrum may be suitably arranged in the vehicle. For example, one such detector may be integrated in a rear-view mirror of the vehicle. If the system comprises a plurality of such detectors, these detectors may be distributed in the vehicle in such a way that the fields of view of the detectors add up to a total field of view which is 360 degrees about the vehicle in a plane parallel or essentially parallel to a surface on which the vehicle is located. The total field of view also covers an angle orthogonal to this plane, for example 30 degrees or 45 degrees above and below this plane.

The method according to the invention may for example be implemented using a system for a vehicle as described above, the system provided on board of the vehicle. The steps of the method may in particular be performed by or under control of a control and evaluation unit carrying out program instructions stored e.g. in the control and evaluation unit.

The method according to the invention for monitoring a vehicle includes the steps described subsequently.

At least one detector for radiation in the visible and / or the infrared portion of the electromagnetic spectrum is operated. The at least one detector therein is provided on board of the vehicle; the at least one detector has a field of view covering a portion of an environment of the vehicle. Signals from the at least one detector are evaluated to determine if an entity is approaching the vehicle. This evaluation may be carried out by a control and evaluation unit which receives the signals from the at least one detector and is provided on board of the vehicle. If from this evaluation it is determined that an entity is approaching the vehicle, at least one sensor for vibration and / or acceleration on board of the vehicle is activated.

In this way, the method according to the invention does not require to keep the sensors in constant operation.

In an embodiment the method includes the subsequently described further steps.

Image data are captured with at least one camera on board of the vehicle if the method has determined that an entity is approaching the vehicle. The image data represent one or more images of a part of an environment of the vehicle. The image data are first temporarily retained, and if a contact between the vehicle and the entity has occurred, image data pertaining to a time-interval stretching from a predefined temporal distance before to a predefined temporal distance after the contact between the vehicle and the entity are stored, for example for later read-out. Image data outside this time-interval may be deleted. In this way, the contact itself is captured by the camera and recorded, i.e. the image data pertaining to the contact are stored. These image data may assist, for example, in identifying an entity having caused the contact, which may be of interest in particular if the contact resulted in damage to the vehicle. Whether a contact between the entity and the vehicle has occurred may be determined based on signals from the sensors.

In an embodiment, a warning signal is triggered if it is determined that a contact between the entity and the vehicle is likely. Whether a contact is likely may be determined as described above in the context of the system. The warning signal may alert unaware entities to the vehicle's presence or may deter an individual intent on causing damage to the vehicle.

The above embodiments may also be used in combination, i.e. a warning signal may be triggered, as described above, and image data may be stored, as described above, if a contact between the entity and the vehicle occurs despite the warning signal.

Signals from the at least one sensor may also be stored for later additional analysis.

Below, the invention and its advantages will be described with reference to the accompanying figures.
- Figure 1: shows a system according to the invention.
- Figure 2: shows a vehicle with fields of view related to the system.
- Figure 3: shows a vehicle with fields of view related to the system.
- Figure 4: shows an embodiment of a method according to the invention as a flow diagram.
- Figure 5: shows a further embodiment of a method according to the invention as a flow diagram.
- Figures 6 to 9: show various envelope curves of signals from sensors.
- Figure 10: shows the relation between a signal and the corresponding envelope curve.
- Figure 11: exemplifies the effect of a threshold for a signal.
- Figure 12: shows time relations between signals and operations.

The figures are schematic illustrations related to embodiments of the invention. The figures therefore are not intended to be construed as limitations of the invention to these specific embodiments.

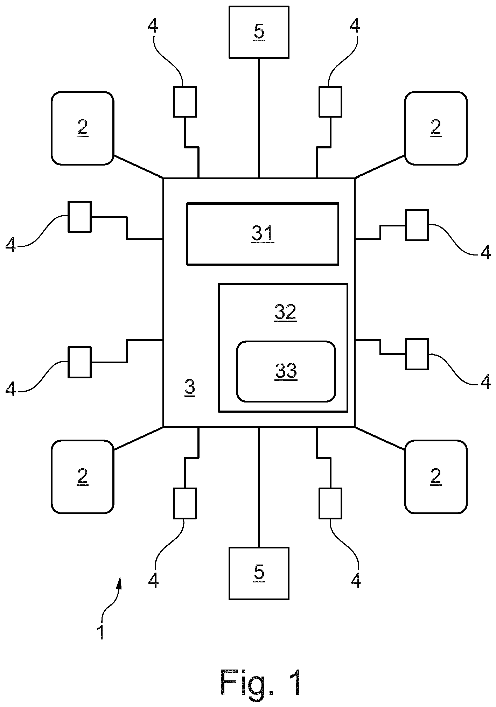

Fig. 1 shows a system 1 according to the invention for a vehicle. At least one detector 2 for visible and / or infrared radiation is connected to control and evaluation unit 3; in the example shown, four such detectors 2 are in connection with the control and evaluation unit 3. Via this connection, the control and evaluation unit 3 can receive signals form the detectors 2. The control and evaluation unit 3 analyses the signals received from the detectors 2 to determine whether an entity is approaching the vehicle. If it is determined that an entity is approaching the vehicle, the control and evaluation unit 3 activates the at least one sensor 4. Plural sensors 4 are shown in the depicted example; at least one of these sensors 4 is a sensor for vibration and / or acceleration. The control and evaluation unit 3 receives signals from the activated sensors 4. The control and evaluation unit 3 can determine from the signals received from the sensors 4 whether a contact between the vehicle and an entity has occurred and may furthermore classify the contact. For performing its functions, the control and evaluation unit 3 comprises a processor 31 and a memory unit 32. The memory unit 32 stores program instructions 33 to be carried out by the processor 31 so that the control and evaluation unit 3 performs its functions. The memory unit 32 may store further data, e.g. data representing signals from the detectors 2 and / or data representing signals from the sensors 4. In the example shown, the system 1 furthermore includes two cameras 5. These cameras 5 can be activated by the control and evaluation unit 3 if the control and evaluation unit 3 determines that an entity is approaching the vehicle. The detectors 2 may for example include a thermoelectric detector, a pyroelectric detector, or a camera operating in the visible and / or the infrared range.

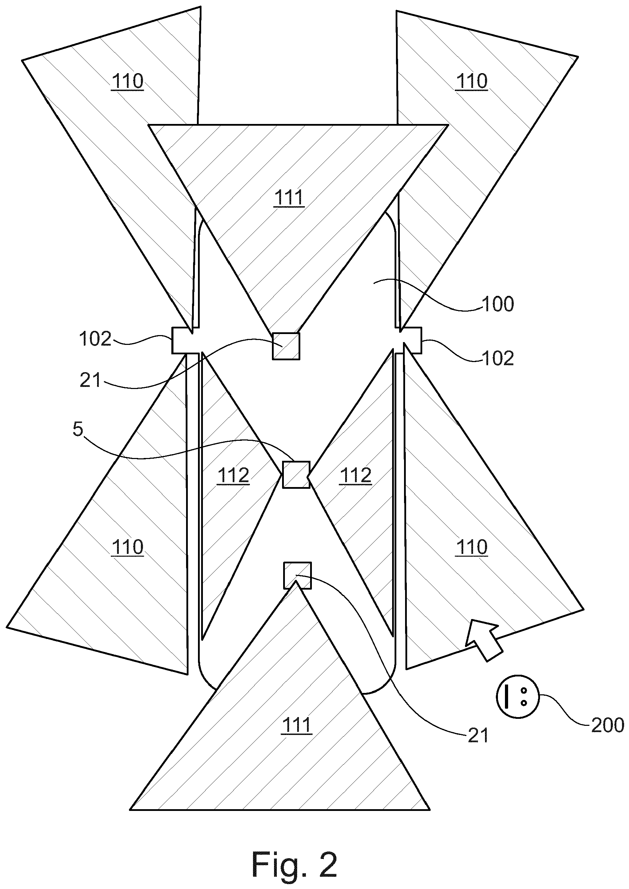

**Fig. 2** shows a vehicle 100 with fields of view of detectors and cameras of a system according to the invention (not fully shown), which system is implemented in the vehicle 100 shown. In a rear-view mirror 102 of the vehicle 100 detectors (not shown) are integrated, which detectors have fields of view 110. These detectors may operate in the visible and / or infrared range. Among the detectors of the system according to the invention implemented in the vehicle 100 shown furthermore are cameras 21 with fields of view 111. These cameras 21, together with the detectors in the rear-view mirrors 102, serve to provide signals to the control and evaluation unit (not shown) to determine whether an entity 200 is approaching the vehicle 100. In the example shown, the system also includes an additional camera 5, which is activated along with the sensors, as described in the context of Fig. 1. This camera 5 has fields of view 112. Both the cameras 21 and the camera 5 may also serve further purposes. While these cameras may be specifically provided for purposes of the invention, they need not be restricted thereto. The vehicle 100 may in particular be configured such that the system according to the invention is activated if the vehicle 100 is in a parking position.

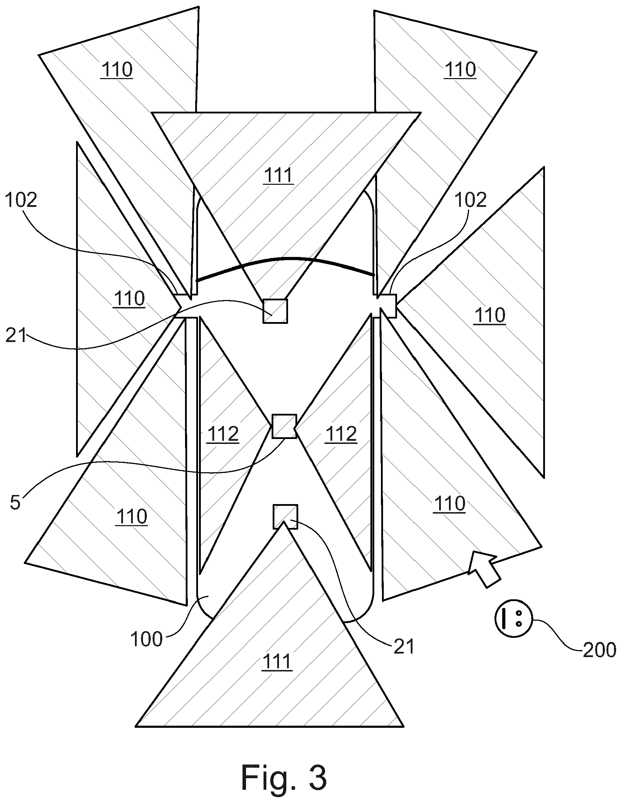

**Fig. 3** shows a further example of a vehicle 100 with fields of view of detectors and cameras of the system according to the invention. The elements shown have already been discussed in the context of Fig. 2. The essential difference with the example of Fig. 2 is that the fields of view 110 of the detectors integrated in the rear-view mirrors 102 cover a larger angle. Together with the fields of view 111 of the cameras 21 this example provides a total field of view (comprising all fields of view 110 and 111) of 360 degrees about the vehicle 100 in a plane (here the plane of the drawing) parallel to a surface on which the vehicle 100 is located.

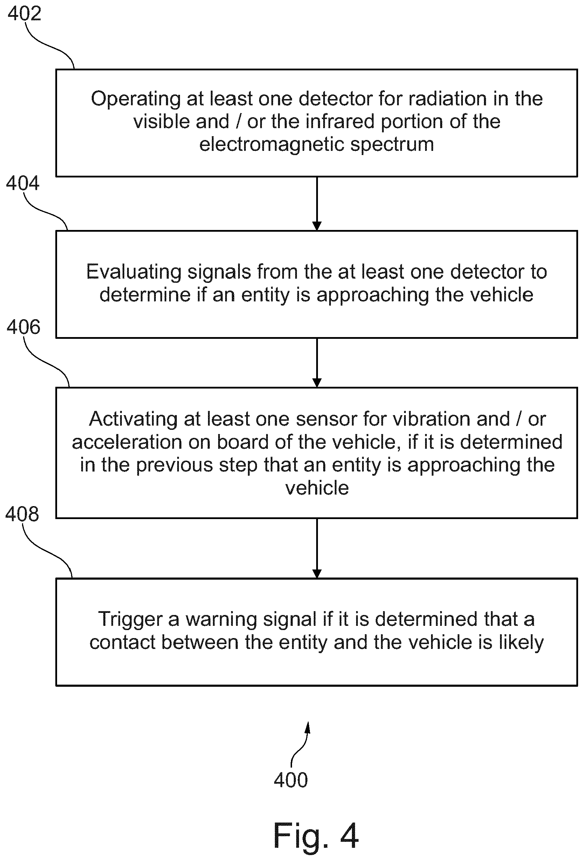

**Fig. 4** shows a flow diagram illustrating an embodiment of a method 400 according to the invention. In step 402 at least one detector for radiation in the visible and / or the infrared portion of the electromagnetic spectrum is operated. The at least one detector is on board of a vehicle. Each of the at least one detector may, independently of further detectors, be for example a thermoelectric detector, a pyroelectric detector, or a camera; such a camera may operate in the visible and / or the infrared range of the electromagnetic spectrum. The at least one detector provides signals, which are evaluated in step 404 to determine whether an entity is approaching the vehicle. If it is determined that an entity is approaching the vehicle, at least one sensor for vibration and / or acceleration on board of the vehicle is activated in step 406. An activated sensor provides signals which can be analysed, for example to determine if a contact between the vehicle and the entity has occurred, and if so, to classify that contact. In the embodiment shown, if it is determined that a contact between the entity and the vehicle is likely, a warning signal is triggered in step 408.

The method according to the invention, and thus in particular the embodiment described here, may be carried out by a system according to the invention, in particular under control by a control and evaluation unit carrying out suitable program instructions. One possibility to determine if a contact between the entity and the vehicle is likely may rely on a distance between the entity and the vehicle. For example, by definition, a contact between the entity and the vehicle may be deemed likely if a distance between the entity and the vehicle is below a predefined threshold.

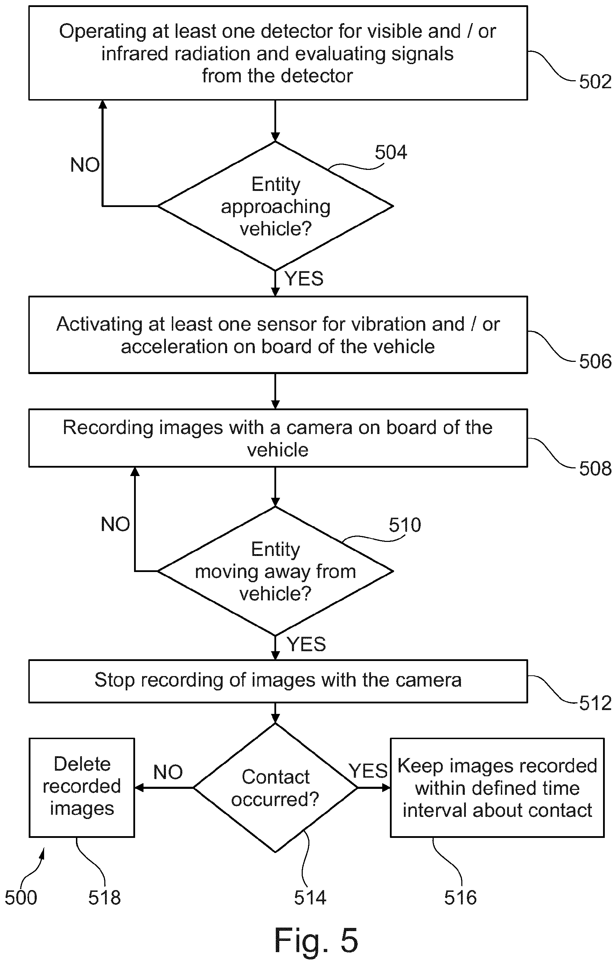

**Fig. 5** shows a flow diagram illustrating a further embodiment of a method 500 according to the invention. In step 502 at least one detector for radiation in the visible and / or the infrared portion of the electromagnetic spectrum is operated. The at least one detector is on board of a vehicle. Each of the at least one detector may, independently of further detectors, be for example a thermoelectric detector, a pyroelectric detector, or a camera; such a camera may operate in the visible and / or the infrared range of the electromagnetic spectrum. The at least one detector provides signals, which are evaluated to determine if an entity is approaching the vehicle. If, in step 504, no entity approaching the vehicle has been detected, the method returns to step 502, i.e. the at least one detector simply continues operating. If in step 504 an entity approaching the vehicle has been detected, the method proceeds to step 506 and activates at least one sensor for vibration and / or acceleration on board of the vehicle. An activated sensor provides signals which can be analysed, for example to determine if a contact between the vehicle and the entity has occurred, and if so, to classify that contact. The method proceeds to step 508 and records images with a camera on board of the vehicle; the field of view of the camera covers a portion of an environment of the vehicle. In step 510 it is checked whether the entity is moving away from the vehicle; this may be done based on signals from the at least one detector. If the entity remains in the proximity of the vehicle, the method loops back to step 508, i.e. the recording of images continues. Otherwise, if the entity moves away from the vehicle, the recording of images is stopped in step 512. Subsequently, in step 514, it is determined, based on signals received from the at least one sensor, whether a contact between the vehicle and the entity occurred. If it is determined that a contact occurred, images recorded according to step 508 are kept in step 516, e.g. stored in a memory on board of the vehicle. The images kept are those which pertain to a predefined time-interval about the contact, for example a time-interval stretching from a predefined temporal distance before the contact to a predefined temporal distance after the contact. On the other hand, if it is determined that no contact between the vehicle and the entity occurred, the recorded images are deleted in step 518.

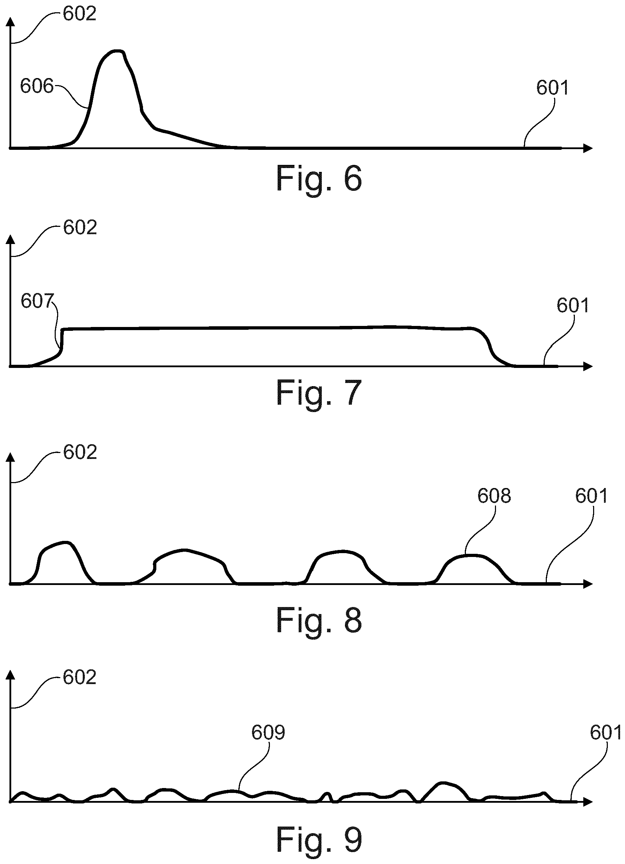

**Figs.** 6 to 9 show graphs of envelope curves pertaining to signals from sensors of the system according to the invention. Each of the graphs shows time on abscissa 601 and values of the envelope curve on ordinate 602. The signals from which the envelope curves shown have been derived are signals from body sound sensors. Fig. 6 shows an envelope curve 606 resulting from an impact event, Fig. 7 shows an envelope curve 607 resulting from a scratch, Fig. 8 shows an envelope curve 608 resulting from communication, Fig. 9 shows an envelope curve 609 resulting from background noise or background music. The shape of the envelope curve may be used to classify the event giving rise to the signal from which the envelope curve was derived. While an elaborate fitting procedure to template envelope curves is not dismissed as a possibility, classification may also be done based on a number of characteristics of the envelope curve. For example, an impact may be reflected in the shape of the envelope curve 606 by single peak of large amplitude, for example an amplitude above a predefined threshold, and a width of the peak, e.g. at half-maximum, below a predefined maximal width. This choice reflects that an impact is a single short-duration event involving high energy, and therefore high amplitude of sound propagating in the material of the vehicle. Envelope curve 607, reflecting a scratch, is characterised by an amplitude lower than that of an impact, and thus for example below a predefined threshold. The duration of a scratch typically is longer than that of an impact, therefore a peak width, e.g. at half-maximum, above a predefined threshold may be required. Communication, corresponding to envelope curve 608, may be characterised by several peaks, all with an amplitude above a lower and below an upper threshold. Background sound, e.g. noise or music, may be characterised by an envelope curve remaining below an upper threshold, and for example not fitting any of the other types of envelope curve. Generally speaking, the shape of the envelope curve may be used to identify the type of event or contact between the vehicle and the entity, the amplitude of the envelope curve may be used to assess the energy involved in the event or contact, and therefore for example the severity of damage caused to the vehicle by the contact. Furthermore, if plural sensors, e.g. plural body sound sensors, are used, the positions of the sensors may be used to estimate the location of the contact on the vehicle. For example, it may be assumed that the contact occurred nearest to that sensor of the plural sensors which yielded the highest envelope curve.

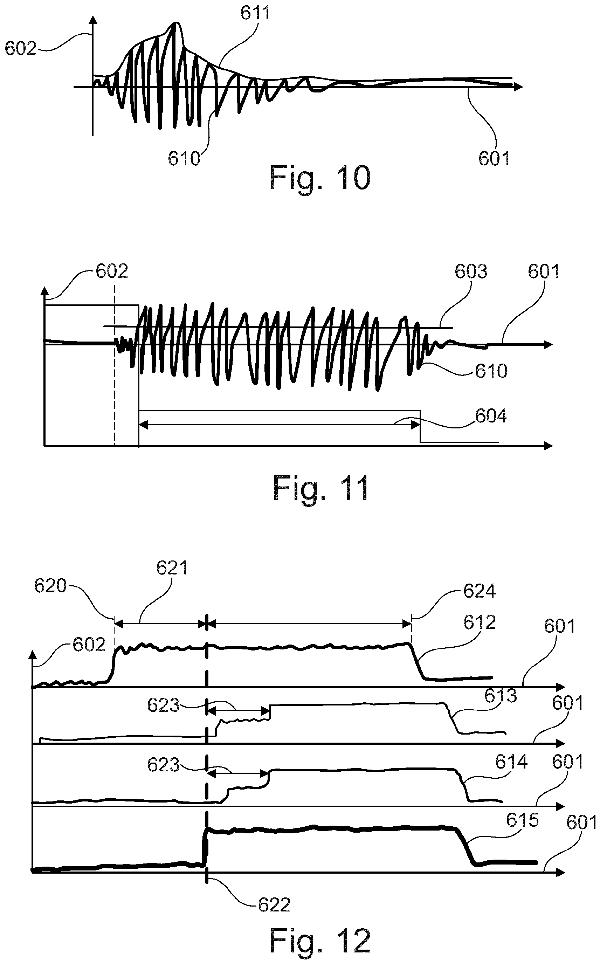

**Fig. 10** shows a graph of a signal 610 and the corresponding envelope curve 611 derived therefrom. The graph shows time on abscissa 601 and signal values on ordinate 602. The signal 610 here is a body sound signal, but the relation between a signal and its envelope curve does not depend on the type of signal, just on the values of the signal.

**Fig. 11** shows a graph with time on the abscissa 601 and signal values on the ordinate 602. Shown is a signal 610 and a threshold 603 for the signal value. Further illustrated is a time-interval 604 during which the maxima of the signal 610 are above the threshold 603. Only the length of this time-interval 604 may, for purposes of analysing a contact or event, be considered the duration of an event or contact causing the signal 610.

**Fig. 12** shows exemplary time relations between some signals and operations. To this end, four curves are shown in a graph with common abscissa 601 showing time, and ordinate 602 showing signal strength for the respective signal (i.e. the units of the ordinate 602 may be different for the four curves shown, and for each curve the ordinate 602 has a respective zero where it is intersected by the respective abscissa 601). Curve 612 shows a signal from a detector, here, as an example, from a detector for infrared radiation. Curve 613 shows the envelope curve from a sensor, here a body sound sensor. Curve 614 shows the activity curve of a camera. Curve 615 shows the intensity of a warning signal.

At time 620 the detector outputs signals which lead to the determination that an entity is approaching the vehicle. For a subsequent time-interval 621 no further action is taken, to avoid spurious false alarms. If the detector signal 612 still indicates an approaching entity after time-interval 621, at time 622 sensors (e.g. sensors 4 in Fig. 1) and camera (e.g. camera 5 in Fig. 1) are activated. Both camera and sensors require some time-interval 623 to become fully active. Also triggered at time 622 is the warning signal, as shown by its intensity curve 615. Here the detector indicates proximity of an entity up to a time 624, after which time 624 sensors, camera and warning signal are deactivated. The detector continues operation to detect potential further approaching entities.

### List of Reference Signs

- 1: system
- 2: detector
- 3: control and evaluation unit
- 4: sensor
- 5: camera
- 21: camera
- 31: processor
- 32: memory
- 33: program instructions
- 100: vehicle
- 102: rear-view mirror
- 110 - 112: field of view
- 200: entity
- 400 - 408: method (steps)
- 500 - 518: method (steps)
- 601: abscissa
- 602: ordinate
- 603: threshold
- 604: time-interval
- 606 - 609: envelope curve
- 610: signal
- 611: envelope curve
- 612-615: curve
- 620: time
- 621: time-interval
- 622: time
- 623: time-interval
- 624: time

## Claims

1. System (1) for a vehicle (100), the system (1) comprising
at least one detector (2) for radiation in the visible and / or the infrared portion of the electromagnetic spectrum;
at least one sensor (4), the at least one sensor (4) including at least one sensor for vibration and / or acceleration;
**characterised by**
a control and evaluation unit (3) connected to the at least one detector (2) and the at least one sensor (4), configured to receive and evaluate signals from the at least one detector (2); and
the control and evaluation unit (3) further configured to activate the at least one sensor (4) if the control and evaluation unit (3) determines from the signals received from the at least one detector (2) that an entity (200) is approaching the vehicle (100).

2. System (1) according to claim 1, wherein the at least one detector (2) includes at least one camera (21) operating in the visible range and / or the infrared range of the electromagnetic spectrum.

3. System (1) according to claim 1, wherein the system (1) includes at least one camera (5) in addition to the at least one detector (2), and the control and evaluation unit (3) is further configured to activate this at least one camera (5) if the control and evaluation unit (3) determines that an entity (200) is approaching the vehicle (100).

4. System (1) according to one of the previous claims, wherein the at least one detector (2) includes at least one thermoelectric or pyroelectric detector.

5. System (1) according to one of the previous claims, wherein the at least one sensor (4) includes at least one body sound sensor and / or at least one inertial sensor.

6. System (1) according to one of the previous claims, wherein the at least one sensor (4) further includes at least one capacitive sensor and / or at least one conductive sensor and / or at least one ultrasonic sensor.

7. System (1) according to one of the previous claims, wherein the control and evaluation unit (3) is further configured to classify a contact between the vehicle (100) and the entity (200) based on signals received from the at least one sensor (4).

8. System (1) according to one of the previous claims, wherein the control and evaluation unit (3) is further configured to trigger a warning signal if the control and evaluation unit (3) determines that a contact between the entity (200) and the vehicle (100) is likely.

9. System (1) according to one of the previous claims, wherein the system (1) includes at least one camera (5, 21), and the system (1) is configured to store image data from the at least one camera (5, 21) captured within a time-interval stretching from a predefined temporal distance before to a predefined temporal distance after a contact between the vehicle (100) and the entity (200).

10. Vehicle (100) including a system (1) according to one of the claims 1 to 9.

11. Vehicle (100) according to claim 10, configured to activate the system (1) when the vehicle (100) is in parking position.

12. Vehicle (100) according to claim 10 or claim 11, wherein at least one of the at least one detector (2) is integrated into a rear-view mirror (102) of the vehicle (100).

13. Method for monitoring a vehicle (100), the method including the steps:
operating at least one detector (2) for radiation in the visible and / or the infrared portion of the electromagnetic spectrum, the detector (2) provided on board of the vehicle (100);
evaluating signals from the detector (2) to determine if an entity (200) is approaching the vehicle (100); and
activating at least one sensor (4) for vibration and / or acceleration on board of the vehicle (100) if it is determined in the previous step that an entity (200) is approaching the vehicle (100).

14. Method according to claim 13, further including the steps:
capturing image data with at least one camera (5, 21) on board of the vehicle (100) if it is determined that an entity (200) is approaching the vehicle (100);
storing image data captured with the camera (5, 21), wherein the image data stored pertain to a time-interval stretching from a predefined temporal distance before to a predefined temporal distance after a contact between the vehicle (100) and the entity (200).

15. Method according to claim 13 or 14, further including the step:
triggering a warning signal if it is determined that a contact between the entity (200) and the vehicle (100) is likely.

## Patentansprüche

1. System (1) für ein Fahrzeug (100), wobei das System (1) umfasst:
mindestens einen Detektor (2) für Strahlung im sichtbaren Bereich und/oder Infrarotbereich des elektromagnetischen Spektrums;
mindestens einen Sensor (4), wobei der mindestens eine Sensor (4) mindestens einen Sensor für Schwingungen und/oder Beschleunigung umfasst;
**gekennzeichnet durch**
eine Steuer- und Auswertungseinheit (3), die mit dem mindestens einen Detektor (2) und dem mindestens einen Sensor (4) verbunden ist und dazu ausgelegt ist, Signale von dem mindestens einen Detektor (2) zu empfangen und auszuwerten; und
wobei die Steuer- und Auswertungseinheit (3) ferner dazu ausgelegt ist, den mindestens einen Sensor (4) zu aktivieren, wenn die Steuer- und Auswertungseinheit (3) anhand der von dem mindestens einen Detektor (2) empfangenen Signale bestimmt, dass sich eine Entität (200) dem Fahrzeug (100) nähert.

2. System (1) nach Anspruch 1, wobei der mindestens eine Detektor (2) mindestens eine Kamera (21) umfasst, die im sichtbaren Bereich und/oder Infrarotbereich des elektromagnetischen Spektrums arbeitet.

3. System (1) nach Anspruch 1, wobei das System (1) mindestens eine Kamera (5) zusätzlich zu dem mindestens einen Detektor (2) umfasst und die Steuer- und Auswertungseinheit (3) ferner dazu ausgelegt ist, diese mindestens eine Kamera (5) zu aktivieren, wenn die Steuer- und Auswertungseinheit (3) bestimmt, dass sich eine Entität (200) dem Fahrzeug (100) nähert.

4. System (1) nach einem der vorhergehenden Ansprüche, wobei der mindestens eine Detektor (2) mindestens einen thermoelektrischen oder pyroelektrischen Detektor umfasst.

5. System (1) nach einem der vorhergehenden Ansprüche, wobei der mindestens eine Sensor (4) mindestens einen Körperschallsensor und/oder mindestens einen Trägheitssensor umfasst.

6. System (1) nach einem der vorhergehenden Ansprüche, wobei der mindestens eine Sensor (4) ferner mindestens einen kapazitiven Sensor und/oder mindestens einen Leitfähigkeitssensor und/oder mindestens einen Ultraschallsensor umfasst.

7. System (1) nach einem der vorhergehenden Ansprüche, wobei die Steuer- und Auswertungseinheit (3) ferner dazu ausgelegt ist, einen Kontakt zwischen dem Fahrzeug (100) und der Entität (200) auf Grundlage von Signalen zu klassifizieren, die von dem mindestens einen Sensor (4) empfangen werden.

8. System (1) nach einem der vorhergehenden Ansprüche, wobei die Steuer- und Auswertungseinheit (3) ferner dazu ausgelegt ist, ein Warnsignal auszulösen, wenn die Steuer- und Auswertungseinheit (3) bestimmt, dass ein Kontakt zwischen der Entität (200) und dem Fahrzeug (100) wahrscheinlich ist.

9. System (1) nach einem der vorhergehenden Ansprüche, wobei das System (1) mindestens eine Kamera (5, 21) umfasst und das System (1) dazu ausgelegt ist, Bilddaten von der mindestens einen Kamera (5, 21) zu speichern, die innerhalb eines Zeitintervalls erfasst werden, das von einem vordefinierten zeitlichen Abstand vor bis zu einem vordefinierten zeitlichen Abstand nach einem Kontakt zwischen dem Fahrzeug (100) und der Entität (200) reicht.

10. Fahrzeug (100), das ein System (1) nach einem der Ansprüche 1 bis 9 umfasst.

11. Fahrzeug (100) nach Anspruch 10, das dazu ausgelegt ist, das System (1) zu aktivieren, wenn sich das Fahrzeug (100) in Parkstellung befindet.

12. Fahrzeug (100) nach Anspruch 10 oder Anspruch 11, wobei mindestens einer von dem mindestens einem Detektor (2) in einen Rückspiegel (102) des Fahrzeugs (100) integriert ist.

13. Verfahren zum Überwachen eines Fahrzeugs (100), wobei das Verfahren die folgenden Schritte umfasst:
Betreiben mindestens eines Detektors (2) für Strahlung im sichtbaren Bereich und/oder Infrarotbereich des elektromagnetischen Spektrums, wobei der Detektor (2) an Bord des Fahrzeugs (100) bereitgestellt wird;
Auswerten von Signalen von dem Detektor (2), um zu bestimmen, ob sich eine Entität (200) dem Fahrzeug (100) nähert; und
Aktivieren mindestens eines Sensors (4) für Schwingungen und/oder Beschleunigung an Bord des Fahrzeugs (100), wenn in dem vorherigen Schritt bestimmt wird, dass sich eine Entität (200) dem Fahrzeug (100) nähert.

14. Verfahren nach Anspruch 13, das ferner die folgenden Schritte umfasst:
Erfassen von Bilddaten mit mindestens einer Kamera (5, 21) an Bord des Fahrzeugs (100), wenn bestimmt wird, dass sich eine Entität (200) dem Fahrzeug (100) nähert;
Speichern von mit der Kamera (5, 21) erfassten Bilddaten, wobei die gespeicherten Bilddaten ein Zeitintervall betreffen, das von einem vordefinierten zeitlichen Abstand vor bis zu einem vordefinierten zeitlichen Abstand nach einem Kontakt zwischen dem Fahrzeug (100) und der Entität (200) reicht.

15. Verfahren nach Anspruch 13 oder 14, das ferner den folgenden Schritt umfasst:
Auslösen eines Warnsignals, wenn bestimmt wird, dass ein Kontakt zwischen der Entität (200) und dem Fahrzeug (100) wahrscheinlich ist.

## Revendications

1. Système (1) pour un véhicule (100), le système (1) comprenant
au moins un détecteur (2) de rayonnement dans le visible et/ou la portion infrarouge du spectre électromagnétique ;
au moins un capteur (4), l'au moins un capteur (4) comportant au moins un capteur de vibration et/ou d'accélération ;
**caractérisé par**
une unité de commande et d'évaluation (3) connectée à l'au moins un détecteur (2) et à l'au moins un capteur (4), configurée pour recevoir et évaluer des signaux en provenance de l'au moins un détecteur (2) ; et
l'unité de commande et d'évaluation (3) étant en outre configurée pour activer l'au moins un capteur (4) si l'unité de commande et d'évaluation (3) détermine, à partir des signaux reçus en provenance de l'au moins un détecteur (2), qu'une entité (200) s'approche du véhicule (100).

2. Système (1) selon la revendication 1, dans lequel l'au moins un détecteur (2) comporte au moins une caméra (21) fonctionnant dans le domaine visible et/ou le domaine infrarouge du spectre électromagnétique.

3. Système (1) selon revendication 1, le système (1) comportant au moins une caméra (5) en plus de l'au moins un détecteur (2), et l'unité de commande et d'évaluation (3) est en outre configurée pour activer cette au moins une caméra (5) si l'unité de commande et d'évaluation (3) détermine qu'une entité (200) s'approche du véhicule (100).

4. Système (1) selon l'une des revendications précédentes, dans lequel l'au moins un détecteur (2) comporte au moins un détecteur thermoélectrique ou pyroélectrique.

5. Système (1) selon l'une des revendications précédentes, dans lequel l'au moins un capteur (4) comporte au moins un capteur de sons corporels et/ou au moins un capteur inertiel.

6. Système (1) selon l'une des revendications précédentes, dans lequel l'au moins un capteur (4) comporte en outre au moins un capteur capacitif et/ou au moins un capteur conducteur et/ou au moins un capteur ultrasonore.

7. Système (1) selon l'une des revendications précédentes, dans lequel l'unité de commande et d'évaluation (3) est en outre configurée pour classer un contact entre le véhicule (100) et l'entité (200) d'après des signaux reçus en provenance de l'au moins un capteur (4).

8. Système (1) selon l'une des revendications précédentes, dans lequel l'unité de commande et d'évaluation (3) est en outre configurée pour déclencher un signal d'avertissement si l'unité de commande et d'évaluation (3) détermine qu'un contact entre l'entité (200) et le véhicule (100) est probable.

9. Système (1) selon l'une des revendications précédentes, le système (1) comportant au moins une caméra (5, 21), et le système (1) étant configuré pour stocker des données d'image en provenance de l'au moins une caméra (5, 21) capturées dans un intervalle de temps s'étalant d'une distance temporelle prédéfinie avant à une distance temporelle prédéfinie après un contact entre le véhicule (100) et l'entité (200).

10. Véhicule (100) comportant un système (1) selon l'une des revendications 1 à 9.

11. Véhicule (100) selon la revendication 10, configuré pour activer le système (1) lorsque le véhicule (100) est en position de stationnement.

12. Véhicule (100) selon la revendication 10 ou la revendication 11, dans lequel au moins l'un de l'au moins un détecteur (2) est intégré dans un rétroviseur intérieur (102) du véhicule (100).

13. Procédé de surveillance d'un véhicule (100), le procédé comportant les étapes :
le fonctionnement d'au moins un détecteur (2) de rayonnement dans le visible et/ou la portion infrarouge du spectre électromagnétique, le détecteur (2) étant prévu à bord du véhicule (100) ;
l'évaluation de signaux en provenance du détecteur (2) pour déterminer si une entité (200) s'approche du véhicule (100) ; et
l'activation d'au moins un capteur (4) de vibration et/ou d'accélération à bord du véhicule (100) s'il est déterminé à l'étape précédente qu'une entité (200) s'approche du véhicule (100).

14. Procédé selon la revendication 13, comportant en outre les étapes :
la capture de données d'image avec au moins une caméra (5, 21) à bord du véhicule (100) s'il est déterminé qu'une entité (200) s'approche du véhicule (100) ;
le stockage de données d'image capturées avec la caméra (5, 21), les données d'image stockées concernant un intervalle de temps s'étalant d'une distance temporelle prédéfinie avant à une distance temporelle prédéfinie après un contact entre le véhicule (100) et l'entité (200).

15. Procédé selon la revendication 13 ou 14, comportant en outre l'étape :
le déclenchement d'un signal d'avertissement s'il est déterminé qu'un contact entre l'entité (200) et le véhicule (100) est probable.
